# EUROPEAN PATENT APPLICATION

(11) **EP 3 388 574 A1**
(43) Date of publication of application: **17.10.2018**
(21) Application number: 16873091.9
(22) Date of filing: 08.12.2016
(51) Int. Cl.: D21H 13/10, D21H 13/50, D21H 17/48

(54) **FLAME-RETARDANT SHEET-FORMING BODY, METHOD FOR PRODUCING FLAME-RETARDANT SHEET-FORMED PRODUCT, AND METHOD FOR PRODUCING FLAME-RETARDANT SHEET-FORMING BODY**

(30) Priority: 10.12.2015 JP 2015240842
(71) Applicant: Sumitomo Bakelite Co.,Ltd., Tokyo 140-0002 (JP)
(72) Inventor: FURUHARA, Shigeyoshi, Tokyo 140-0002 (JP); HASHIMOTO, Kouichi, Tokyo 140-0002 (JP)
(74) Representative: Müller-Boré & Partner Patentanwälte PartG mbB
(86) International application number: PCT/JP2016/086637
(87) International publication number: WO 2017/099198

(57) **Abstract**

Provided is a flame-retardant sheet-forming body containing a matrix resin, a flame-retardant fiber, and a metal hydroxide. The content of the metal hydroxide in the flame-retardant sheet-forming body is 1 to 20% by weight with respect to the total weight of the flame-retardant sheet-forming body. In addition, the flame-retardant fiber in the flame-retardant sheet-forming body is preferably at least one of an aramid fiber, a pitch-based carbon fiber, and a BPO fiber.

## Description

### Technical Field

The present invention relates to a flame-retardant sheet-forming body, a method for producing a flame-retardant sheet-formed product, and a method for producing a flame-retardant sheet-forming body.

### Background Art

Fiber-reinforced composite materials using a reinforcement fiber such as a plastic fiber, a carbon fiber, or a glass fiber and a matrix resin are excellent in terms of strength, rigidity, and the like, and therefore have been widely used in electric and electronic applications, civil engineering and construction applications, automobile applications, aircraft applications, and other applications.

For example, PTL 1 discloses improving the material yield and sheet-forming sheet handleability upon wet sheet-forming, with respect to a wet sheet-forming material obtained by subjecting a material composition containing a matrix resin and a base fiber to wet sheet-forming. In addition, PTL 2 discloses a flame-retardant fiber-reinforced composite material in which a fiber is impregnated with a resin.

The "sheet-forming body" is generally used as a technical term indicating the state of a material obtained by using a method of spreading a fiber material thin and drying it. This state is described, for example, in PTL 3 and 4. According to PTL 3 and 4, it is stated that the sheet-forming body refers to a solid content in a wet state which remains on a filter after the liquid component is dehydrated from a raw material slurry obtained by dispersing a raw material such as fiber or resin in a dispersion medium. The wet state referred to herein means a cured state before drying and heat treatment, that is, a cured state before post-curing.

Further, according to PTL 3 and 4, the sheet-forming body is used for a formed product shaped and obtained by heating it in a mold and drying it. That is, it is stated that the sheet-forming body is used as a forming material.

### Citation List

### Patent Literature

[PTL 1] Japanese Unexamined Patent Application Publication No. 2012-7254
[PTL 2] Japanese Unexamined Patent Application Publication 2013-67138
[PTL 3] Japanese Patent No. 4675276
[PTL 4] Japanese Patent No. 5426399

### Summary of Invention

### Technical Problem

The wet sheet-forming material disclosed in PTL 1 is a material focusing on the strength as a fiber-reinforced composite material, but it is not a material focusing on flame retardancy. Further, since the fiber-reinforced composite material disclosed in PTL 2 is a material in which a fiber is impregnated with a resin, there is room for further improvement in flame retardancy.

### Solution to Problem

As for the evaluation of flame retardancy, for example, regarding the safety of electrical equipment, there is a standard "UL 94" established by Underwriters Laboratories Inc. (UL, USA) . However, in fields such as parts for civil engineering and construction parts, structural parts for automobiles and two-wheeled vehicles, or parts for aircrafts, higher flame retardancy is required, in particular, emphasis is placed on exothermicity (heat release). Further, evaluation of smoke emission, toxic gas generation (combustion toxicity), or the like is important as one of flame retardancy evaluation. As standards for aircraft interior parts, there are standards such as FAR 25.853 on smoke emission and ABD 0031 on combustion toxicity.

The present inventors have conducted intensive studies on the development of a more advanced flame-retardant material. As a result, it has been found that, by subjecting a specific fiber material and a resin to sheet-forming, a special structure can be obtained in which the fiber material and the resin are uniformly mixed while maintaining the shape of the fiber material, and the fiber material and the resin are deposited in layers in a plane direction while being entangled with each other. Further, in the case where this structure contains a metal hydroxide in addition to a specific fiber material and a resin, it has been found that it is possible to obtain a flame-retardant sheet-forming body capable of realizing reduced smoke emission and combustion toxicity while having high flame retardancy which has not been achieved in a conventional art.

The present invention provides a flame-retardant sheet-forming body containing a matrix resin, a flame-retardant fiber, and a metal hydroxide.

The present invention provides a method for producing a flame-retardant sheet-forming body in which a matrix resin, a flame-retardant fiber, and a metal hydroxide are mixed and then formed into a sheet.

### Advantageous Effects of Invention

According to the present invention, it is possible to provide a flame-retardant sheet-forming body which exhibits excellent flame retardancy and reduced smoke emission and combustion toxicity.

### Brief Description of Drawings

FIG. 1 is a perspective view schematically showing an example of a flame-retardant sheet-forming sheet according to the present embodiment.
FIG. 2 is a cross-sectional view schematically showing an example of a method for producing a flame-retardant sheet-forming sheet according to the present embodiment. Description of Embodiments

Hereinafter, embodiments of the present invention will be described with reference to the accompanying drawings. In all the drawings, the same or like components are denoted by the same reference numerals, and description thereof will be omitted as appropriate.

The flame-retardant sheet-forming body is obtained by dispersing a material composition containing a matrix resin, a flame-retardant fiber, and a metal hydroxide in a solvent, flocculating them, and separating the resulting flocculate from the solvent using a sheet-forming mesh and then forming into a sheet. The flame-retardant sheet-forming body thus obtained has a special structure resulting from sheet-forming. That is, the obtained flame-retardant sheet-forming body has structural features A to C in the following points.

(Feature A) Flame-retardant fibers (short fibers) are randomly oriented in a plan view of the surface of the flame-retardant sheet-forming body (in the in-plane direction of the flame-retardant sheet-forming body).
(Feature B) In the cross-sectional view in the thickness direction of the flame-retardant sheet-forming body, the orientation state of flame-retardant fibers is highly controlled, and the flame-retardant fibers are oriented in a specific direction. More specifically, the flame-retardant fibers are oriented in the plane direction of the flame-retardant sheet-forming body. Therefore, the flame-retardant fibers are laminated in the thickness direction of the flame-retardant sheet-forming body.
(Feature C) The flame-retardant fibers are bound to each other by a matrix resin.

In the present specification, the fact that the flame-retardant fibers are oriented in a specific direction of the flame-retardant sheet-forming body means that the majority of the flame-retardant fibers are oriented in the direction of engagement, and all the flame-retardant fibers need not be oriented in such a direction. For example, 90% or more of the flame-retardant fibers may be oriented in such a direction.

In addition, the flame-retardant sheet-forming body is also a material for forming a material composition into a desired shape by heating and pressurizing treatment after forming the material composition into a sheet.

The flame-retardant sheet-forming body may be in, for example, a two-dimensional sheet shape or may be in a three-dimensional shape processed into a shape imitating a desired formed product shape (that is, in the form of a basic body) . From the viewpoint of workability and wide application, it is preferable that the flame-retardant sheet-forming body is sheet-like, and from the viewpoint of simplifying forming processes, it is preferable that the flame-retardant sheet-forming body is in the form of a basic body.

Such a shape of the flame-retardant sheet-forming body is adjusted by appropriately selecting a shape of a sheet-forming mesh at the time of sheet-forming. For example, in the case where a planar sheet-forming mesh is used, a sheet-like sheet-forming body is obtained, and in the case where a sheet-forming mesh having protrusions is used, a sheet-forming body with a three-dimensional shape having protrusions is obtained.

The matrix resin in the flame-retardant sheet-forming body is in a state not completely cured, for example, in a B stage state. Therefore, the flame-retardant sheet-forming body can be transformed into another shape. Then, by heating the flame-retardant sheet-forming body at a curing temperature of a matrix resin to be used, it is possible to obtain a formed product by completely curing the matrix resin.

In the present embodiment, the flame retardancy means a property that a substance hardly burns even in the case where it comes into contact with a flame.

First, individual components of the material composition of the flame-retardant sheet-forming body according to the present embodiment will be described.

### (Matrix resin)

The matrix resin in the present embodiment acts as a binder. The matrix resin is preferably a thermosetting resin. Examples of the thermosetting resin include a phenol resin, an epoxy resin, an unsaturated polyester resin, a melamine resin, and polyurethane. These resins can be appropriately selected and used as required. These resins may be used alone or in combination of two or more thereof.

It is more preferable to include at least one of a phenol resin and an epoxy resin from the viewpoint of balance between mechanical properties and flame retardancy, and it is still more preferable to include a phenol resin from the viewpoint of low smoke emission and low combustion toxicity.

As the matrix resin, a thermosetting resin having a granular or powdery shape can be used. This makes it possible to more effectively improve the mechanical properties of the flame-retardant sheet-formed product obtained by curing the flame-retardant sheet-forming body. Although the reason for this is not clear, it is presumed due to the fact that the interface between the flame-retardant fiber and the thermosetting resin is satisfactorily formed since the thermosetting resin has a granular or powdery shape at the time of forming the flame-retardant sheet-forming body by heating and pressurizing it, thus improving impregnability at the time of melting.

As the matrix resin, for example, a solid state resin having an average particle diameter of 500 µm or less can be used. This makes it easier to form the flocculated state of the matrix resin in the production process of a flame-retardant sheet-forming body described later. Further, from the viewpoint of obtaining a varnish-like material composition in the production process of a flame-retardant sheet-forming body, the average particle diameter of the matrix resin is more preferably 1 nm or more and 300 µm or less.

The matrix resin having such an average particle diameter can be obtained by performing a pulverization treatment using, for example, an atomizer pulverizer or the like.

The average particle diameter of the matrix resin can be determined as an average particle diameter of 50% by mass on a mass basis using a laser diffraction particle size distribution analyzer such as SALD-7000 (manufactured by Shimadzu Corporation).

The content of the matrix resin is preferably 5% by weight or more, more preferably 15% by weight or more, and still more preferably 20% by weight or more with respect to the total weight of the flame-retardant sheet-forming body. This makes it possible to more effectively improve the workability and lightweightness of the flame-retardant sheet-forming body. On the other hand, the content of the matrix resin is preferably 90% by weight or less, more preferably 80% by weight or less, and still more preferably 60% by weight or less with respect to the total weight of the flame-retardant sheet-forming body. This makes it possible to more effectively improve the thermal properties of the flame-retardant sheet-formed product obtained by curing the flame-retardant sheet-forming body, thereby capable of achieving improved low smoke emission and low combustion toxicity.

In the case where a thermosetting resin is used as the matrix resin, it is preferred that the thermosetting resin contained in the flame-retardant sheet-forming body is in a semi-cured state. The semi-cured thermosetting resin is completely cured in the step of forming the flame-retardant sheet-forming body after production thereof into a desired shape by heating and pressurizing it. As a result, a flame-retardant sheet-formed product exhibiting an excellent balance of high strength, flame retardancy, low smoke emission and low combustion toxicity is obtained.

### (Flame-retardant fiber)

The flame-retardant fiber in the present embodiment refers to a fiber which itself is flame-retardant. For example, the flame-retardant fiber has a limiting oxygen index according to JIS K7201 of preferably 22 or more, more preferably 24 or more, and still more preferably 50 or more.

Examples of the flame-retardant fiber include inorganic fibers such as metal fibers, ceramic fibers, glass fibers, and carbon fibers, and organic fibers such as wholly aromatic polyamide (aramid), wholly aromatic polyester, wholly aromatic polyester amide, wholly aromatic polyether, wholly aromatic polycarbonate, wholly aromatic polyazomethine, polyphenylenesulfide (PPS), poly(para-phenylenebenzobisthiazole) (PBZT), polybenzimidazole (PBI), polyether ether ketone (PEEK), polyamideimide (PAI), polyimide, polytetrafluoroethylene (PTFE), and poly(para-phenylene-2,6-benzobisoxazole) (PBO). From the viewpoint of balancing flame retardancy, smoke emission, and combustion toxicity, it is preferred that the carbon fiber is a pitch-based carbon fiber. These flame-retardant fibers may be used alone or in combination of two or more thereof.

From the viewpoint of effectively reducing smoke emission and combustion toxicity, more preferred is a glass fiber, a pitch-based carbon fiber, wholly aromatic polyamide (aramid), or poly(para-phenylene-2,6-benzobisoxazole) (PBO). From the viewpoint of residual flame time in the case where it is burned, more preferred is a pitch-based carbon fiber. From the viewpoint of exothermicity (heat release), more preferred is poly(para-phenylene-2,6-benzobisoxazole) (PBO).

Examples of commercially available flame-retardant fibers include, but are not limited to, KEVLAR (registered trademark) which is an aramid fiber manufactured by Du Pont-Toray Co., Ltd., TECHNORA (registered trademark) which is an aramid fiber manufactured by Teijin Techno Products Co., Ltd., ZYLON (registered trademark) which is a polyparaphenylene benzoxazole fiber manufactured by Toyo Boseki Kabushiki Kaisha, a glass fiber manufactured by Nitto Boseki Co., Ltd., and DENKA ARSENE which is an alumina fiber manufactured by Denka Company Limited.

The content of the flame-retardant fiber is preferably 5% by weight or more, more preferably 10% by weight or more, and still more preferably 15% by weight or more with respect to the total weight of the flame-retardant sheet-forming body. This makes it possible to effectively reduce the smoke emission and combustion toxicity while obtaining the strength of the flame-retardant sheet-forming body. On the other hand, the content of the flame-retardant fiber is preferably 60% by weight or less, more preferably 50% by weight or less, and still more preferably 40% by weight or less with respect to the total weight of the flame-retardant sheet-forming body. As a result, the flame-retardant fiber and the matrix resin are properly entangled to improve flame retardancy and to further improve the formability and workability of the flame-retardant sheet-forming body.

In addition, it is preferred that the content of the matrix resin is 5 to 90% by weight and the content of the flame-retardant fiber is 5 to 60% by weight with respect to the total weight of the flame-retardant sheet-forming body, it is more preferred that the content of the matrix resin is 15 to 80% by weight and the content of the flame-retardant fiber is 10 to 50% by weight with respect to the total weight of the flame-retardant sheet-forming body, and it is still more preferred that the content of the matrix resin is 20 to 60% by weight and the content of the flame-retardant fiber is 15 to 40% by weight with respect to the total weight of the flame-retardant sheet-forming body. Thereby, it is possible to effectively disperse the flame-retardant fibers in the matrix resin while obtaining strength and it is possible to more stably obtain a special structure resulting from sheet-forming.

### (Metal hydroxide)

The flame-retardant sheet-forming body according to the present embodiment further contains a metal hydroxide. The metal hydroxide does not burn itself, absorbs heat upon decomposition and releases water molecules with large heat capacity upon decomposition. Due to such properties, the flame-retardant sheet-forming body containing a metal hydroxide has excellent flame retardancy. In addition, the coexistence of the metal hydroxide, the matrix resin and the flame-retardant fiber makes it possible to effectively suppress the generation of toxic gases in the case where the flame-retardant sheet-forming body is brought into contact with a flame. As a result, it is possible to provide a flame-retardant sheet-forming body having sufficiently reduced smoke emission and combustion toxicity.

The metal hydroxide is a metal compound containing crystal water, and examples thereof include aluminum hydroxide, magnesium hydroxide, zirconium hydroxide, zinc hexahydroxystannate, zinc borate 3.5hydrate, and calcium aluminate hydrate. Among them, aluminum hydroxide or magnesium hydroxide is preferable from the viewpoint of low smoke emission and low combustion toxicity, and aluminum hydroxide is more preferable.

The content of the metal hydroxide is 1 to 20% by weight with respect to the total weight of the flame-retardant sheet-forming body. In the case where the content of the metal hydroxide is within the above-specified range, it is possible to provide a flame-retardant sheet-forming body having excellent flame retardancy and reduced smoke emission and combustion toxicity. Further, in the case where the content of the metal hydroxide is within the above-specified range, it is possible to sufficiently increase the mechanical properties (mechanical strength) of the flame-retardant sheet-formed product to be shaped using the flame-retardant sheet-forming body. As a result, a flame-retardant sheet-formed product exhibiting an excellent balance of high strength, flame retardancy, low smoke emission and low combustion toxicity can be obtained. From the viewpoint of the balance between high flame retardancy and high mechanical properties, the content of the metal hydroxide is preferably about 1 to 18% by weight, more preferably about 2 to 15% by weight, and still more preferably 3 to 12% by weight.

The flame-retardant sheet-forming body according to the present embodiment can further contain the following components.

### (Pulp)

The flame-retardant sheet-forming body according to the present embodiment may contain pulp. The pulp is a fiber material having a fibril structure, which is different from the above-mentioned flame-retardant fiber. The pulp can be obtained, for example, by mechanically or chemically fibrillating the fiber material.

At the time of producing the flame-retardant sheet-forming body, the matrix resin can be more effectively flocculated by subjecting the pulp together with the matrix resin and the flame-retardant fiber to sheet-forming. This makes it possible to realize the production of a more stable flame-retardant sheet-forming body.

Examples of the pulp include fibrillated products of cellulose fibers such as linter pulp and wood pulp, natural fibers such as kenaf, jute and bamboo, and organic fibers such as para-type wholly aromatic polyamide fibers (aramid fibers) and copolymers thereof, aromatic polyester fibers, polybenzazol fibers, meta-type aramid fibers and copolymers thereof, acrylic fibers, acrylonitrile fibers, polyimide fibers, and polyamide fibers. Pulps may be used alone or in combination of two or more thereof. Among these, it is preferable to contain one or both of aramid pulp composed of aramid fibers and polyacrylonitrile pulp composed of acrylonitrile fibers, from the viewpoint of improving the mechanical properties or thermal properties of the flame-retardant sheet-formed product using the flame-retardant sheet-forming body, from the viewpoint of improving the dispersibility of the flame-retardant fiber, and from the viewpoint of low smoke emission and low combustion toxicity.

The content of the pulp is preferably 0.5% by weight or more, more preferably 1.5% by weight or more, and still more preferably 2% by weight or more with respect to the total weight of the flame-retardant sheet-forming body. Thereby, it is possible to more effectively generate the flocculation of the matrix resin at the time of sheet-forming and therefore realize the production of a more stable flame-retardant sheet-forming body. On the other hand, the content of the pulp is preferably 15% by weight or less, more preferably 10% by weight or less, and still more preferably 8% by weight or less with respect to the total weight of the flame-retardant sheet-forming body. This makes it possible to more effectively improve the mechanical properties and thermal properties of the cured product obtained by curing the flame-retardant sheet-forming body.

### (Flocculating agent)

The flame-retardant sheet-forming body according to the present embodiment may contain a flocculating agent. The flocculating agent has a function of flocculating the matrix resin and the flame-retardant fiber in the form of a flock at the time of producing the flame-retardant sheet-forming body. Therefore, it is possible to realize the production of a more stable flame-retardant sheet-forming body.

Examples of the flocculating agent include a cationic polymer flocculating agent, an anionic polymer flocculating agent, a nonionic polymer flocculating agent, and an amphoteric polymer flocculating agent. More specifically, examples thereof include cationic polyacrylamide, anionic polyacrylamide, Hofmann polyacrylamide, Mannich polyacrylamide, amphoteric copolymerized polyacrylamide, cationized starch, amphoteric starch, and polyethylene oxide. These flocculating agents may be used alone or in combination of two or more thereof. Further, with respect to the flocculating agent, its polymer structure and molecular weight, the amount of functional group such as hydroxyl group or ionic group, and the like can be adjusted according to required properties.

The content of the flocculating agent is preferably 0.05% by weight or more, more preferably 0.1% by weight or more, and still more preferably 0.15% by weight or more with respect to the total weight of the flame-retardant sheet-forming body. This makes it possible to achieve an improved yield in the production of a flame-retardant sheet-forming body using a sheet-forming method. On the other hand, the content of the flocculating agent is preferably 3% by weight or less, more preferably 2% by weight or less, and still more preferably 1.5% by weight or less with respect to the total weight of the flame-retardant sheet-forming body. This makes it possible to more easily and stably carry out a dehydration treatment or the like in the production of a flame-retardant sheet-forming body using a sheet-forming method.

### (Other)

The flame-retardant sheet-forming body according to the present embodiment may contain, in addition to the above-mentioned individual components, a known flame retardant excluding the foregoing metal hydroxide and a powdery substance having an ion-exchange capacity.

Examples of the flame retardant include an antimony compound and a phosphorus compound. Examples of the antimony compound include antimony trioxide and antimony pentoxide. Examples of the phosphorus compound include phosphoric acid esters and polyphosphoric acid salts.

The content of the flame retardant is preferably 5% by weight or more and more preferably 7% by weight or more with respect to the total weight of the flame-retardant sheet-forming body. On the other hand, the content of the flame retardant is preferably 20% by weight or less and more preferably 15% by weight or less with respect to the total weight of the flame-retardant sheet-forming body.

As the powdery substance having an ion-exchange capacity, for example, it is preferable to use one or two or more intercalation compounds selected from clay mineral, scale-like silica fine particles, hydrotalcites, fluorine teniolite, and swellable synthetic mica.

Examples of the clay mineral include smectite, halloysite, kanemite, kenyaite, zirconium phosphate, and titanium phosphate.

Examples of hydrotalcites include hydrotalcite and hydrotalcite-like substances.

Examples of the fluorine teniolite include lithium-type fluorine teniolite and sodium-type fluorine teniolite.

Examples of the swellable synthetic mica include sodium-type tetrasilicic fluorine mica and lithium-type tetrasilicic fluorine mica.

These intercalation compounds may be natural products or synthetic products. Among these, more preferred is a clay mineral, and still more preferred is smectite which is present from natural products to synthetic products and therefore exhibits a wide range of selection thereof. Examples of the smectite include montmorillonite, beidellite, nontronite, saponite, hectorite, sauconite, and stevensite, any one or more of which can be used. Montmorillonite is a hydrous silicate of aluminum, but it may be bentonite having montmorillonite as a main component and containing other minerals such as quartz, mica, feldspar, and zeolite. Synthetic smectite with less impurities is preferable, for example, in the case of being used for applications that are concerned with coloration and impurities.

Various additives can be further used for the flame-retardant sheet-forming body according to the present embodiment in order to adjust production conditions and exhibit required physical properties. Examples of such additives include an inorganic powder or metallic powder for the purpose of improving properties, a stabilizer such as an antioxidant or an ultraviolet absorber, a release agent, a plasticizer, a curing catalyst or curing accelerator for resins, a pigment, a paper strength improver such as a dry paper strength improver or a wet paper strength improver, a yield-improving agent, a drainage improver, a size fixing agent, a defoaming agent, a sizing agent such as a rosin-based sizing agent for acidic sheet-forming, a rosin-based sizing agent for neutral papermaking, an alkyl ketene dimer-based sizing agents, an alkenylsuccinic anhydride-based sizing agent, or a special modified rosin-based sizing agent, and a flocculating agent such as sulfuric acid band, aluminum chloride, or polyaluminum chloride.

Next, a method for producing a flame-retardant sheet-forming body will be described.

In the present embodiment, the method for producing a flame-retardant sheet-forming body has a step of mixing a matrix resin, a flame-retardant fiber, and a metal hydroxide, and then forming the mixture into a sheet.

The sheet-forming method is a papermaking technique which is one of paper manufacturing technologies. That is, the flame-retardant sheet-forming body is obtained by treating a material composition containing a matrix resin, a flame-retardant fiber, and a metal hydroxide by a sheet-forming method.

By adopting the sheet-forming method, it is possible to obtain a flame-retardant sheet-forming body having excellent flame retardancy, particularly excellent low smoke emission and low combustion toxicity. Although the reason for this is not necessarily clarified, it is considered that random entanglements of flame-retardant fibers can be moderately created while maintaining the shape of the flame-retardant fibers in the plane direction (XY-axis direction) of the flame-retardant sheet-forming body by the sheet-forming method and the flame-retardant fibers can form a special structure such that they overlap in the thickness direction (Z-axis direction) . As a result, it is presumed that the thermal properties of the flame-retardant sheet-forming body are improved, so that high flame retardancy can be obtained and smoke emission and combustion toxicity can be more effectively reduced. In the conventional art, since the flame retardancy was not sufficient, halogens or the like contained in the material smoked and therefore tended to generate toxic gases. On the other hand, the flame-retardant sheet-forming body according to the present embodiment achieves high flame retardancy by providing a special structure of a matrix resin, a specific flame-retardant fiber and a metal hydroxide resulting from a sheet-forming method, whereby it is possible to suppress smoke emission and combustion toxicity. In addition, since the sheet-forming method exhibits excellent workability, the flame-retardant sheet-forming body according to the present embodiment can have high design properties.

Further, in the flame-retardant sheet-forming body, the angle formed by the longitudinal direction of the flame-retardant fiber and the plane direction of the flame-retardant sheet-forming body is preferably about 0 to 10° and more preferably about 0 to 8°. By flame-retardant fibers being oriented so as to satisfy such conditions, the flame-retardant fibers are more uniformly laminated in the thickness direction of the flame-retardant sheet-forming body. Such a flame-retardant sheet-forming body has higher flame retardancy and is capable of achieving further reduced smoke emission and combustion toxicity.

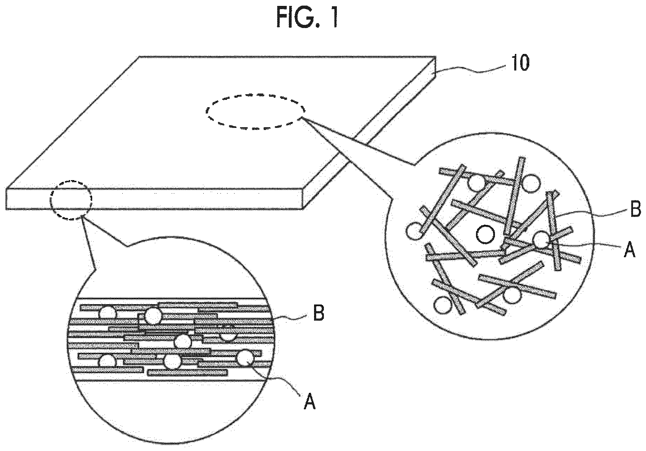

FIG. 1 is a perspective view schematically showing an example of a flame-retardant sheet-forming sheet according to the present embodiment. In FIG. 1, the metal hydroxide is omitted.

As shown in FIG. 1, the flame-retardant sheet-forming sheet 10 has a special structure resulting from sheet-forming, in which the matrix resins (A) and the flame-retardant fibers (B) are randomly entangled in the in-plane direction, and such planes overlap in the thickness direction. In addition, the flame-retardant fibers (B) are bound to each other by the matrix resins (A). The flame-retardant fibers (B) may have a linear shape, may be curved, or may be folded in a plan view.

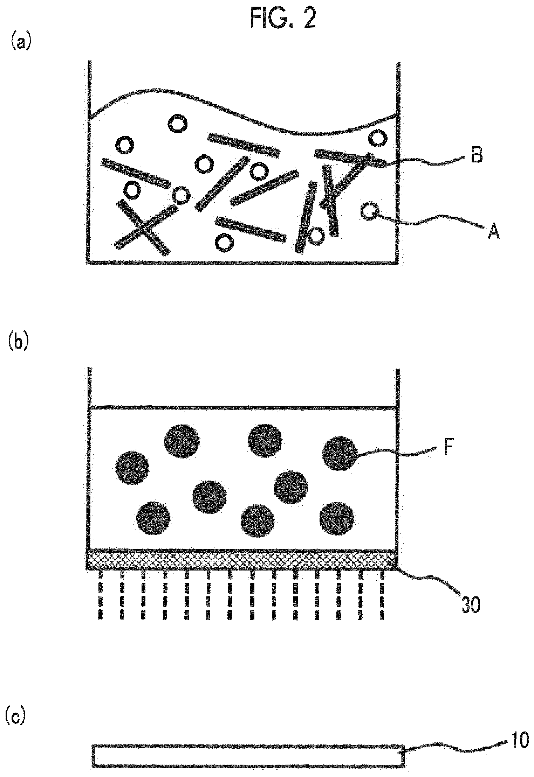

FIG. 2 is a cross-sectional view schematically showing an example of a method for producing a flame-retardant sheet-forming sheet according to the present embodiment. Hereinafter, a method for producing the flame-retardant sheet-forming sheet 10 by a wet sheet-forming method will be described in detail with reference to FIG. 2.

First, as shown in FIG. 2(a), matrix resin (A), flame-retardant fiber (B) and metal hydroxide (not shown) are added, stirred, mixed and dispersed in a solvent. In this manner, a varnish-like material composition for forming a flame-retardant sheet-forming body can be obtained.

In this case, other components except the flocculating agent among the above-mentioned components may be added to the solvent.

The method of dispersing each component in a solvent is not particularly limited. For example, a method of stirring using a disperser can be mentioned.

The solvent is not particularly limited, but a solvent having a boiling point of 50°C or higher and 200°C or lower is preferable from the viewpoint of preventing volatilization in the process of dispersing the constituent materials of the material composition, easily removing the solvent in order to suppress the remaining thereof in the flame-retardant sheet-forming body, and suppressing an increase of energy due to the removal of a solvent.

Examples of such a solvent include water; alcohols such as ethanol, 1-propanol, 1-butanol, and ethylene glycol; ketones such as acetone, methyl ethyl ketone, 2-heptanone, and cyclohexanone; esters such as ethyl acetate, butyl acetate, and methyl acetoacetate; and ethers such as tetrahydrofuran, isopropyl ether, dioxane, and furfural. These solvents may be used alone or in combination of two or more thereof . Among these, it is particularly preferable to use water in terms of abundant supply amount, inexpensiveness, low environmental burden, high safety, and easy handleability.

In the present embodiment, a flocculating agent can be further added to the varnish-like material composition obtained as described above. This makes it easier to flocculate the matrix resin (A), the flame-retardant fiber (B) and the metal hydroxide in the solvent in the form of a floc to obtain a flocculate (F) (see FIG. 2(b)).

Next, as shown in FIG. 2(b), the solvent and the flocculate (F) as obtained above are placed in a container with a bottom surface composed of a sheet-like mesh 30, and the solvent is discharged from the mesh 30. Thereby, the flocculate (F) and the solvent can be separated from each other. As a result, the flocculate (F) remains as a sheet on the mesh 30.

Here, it is possible to adjust the shape of the resulting flame-retardant sheet-forming body by appropriately selecting the shape of the mesh 30.

In the present embodiment, the sheet-like flocculate (F) obtained as described above can be taken out and placed and then dried in a drying oven to further remove the solvent. In this manner, the flame-retardant sheet-forming sheet 10 as shown in FIG. 2(c) is produced.

Next, the flame-retardant sheet-formed product will be described.

The flame-retardant sheet-formed product is obtained by heating and pressurizing the flame-retardant sheet-forming body. For this purpose, after forming a two-dimensional sheet-like flame-retardant sheet-forming body, it may be formed into a desired three-dimensional shape by heating and pressurizing. Alternatively, after obtaining a three-dimensional shape (basic body) by selecting a sheet-forming mesh so as to have a desired shape at the time of sheet-forming, it may be shaped by applying heat and pressure.

Applications of the flame-retardant sheet-formed product are not particularly limited. For example, the flame-retardant sheet-formed product can be applied to various applications exemplified by electric and electronic applications, automobile and aircraft applications, and the like. More specifically, there are a substrate constituting electronic components, such as a flexible wiring substrate, an interposer substrate, a component built-in substrate, or an optical waveguide substrate, a housing of an electronic device, a heat radiation member, and the like.

The method for producing a flame-retardant sheet-formed product may be any method as long as it includes a step of heating and pressurizing a flame-retardant sheet-forming body, in which the heating and pressurizing conditions can be appropriately set according to the purpose.

Although the embodiments of the present invention have been described above, these are examples of the present invention and various configurations other than those described above can also be adopted.

### EXAMPLES

Hereinafter, the present invention will be specifically described with reference to Examples, but the present invention is not limited by these Examples.

### <Examples 1 to 6 and Comparative Examples 1 and 2>

### (Production of sheet-like flame-retardant sheet-forming)

With respect to Examples 1 to 6 and Comparative Examples 1 and 2 shown in Table 1, a sheet-like flame-retardant sheet-forming body was produced as follows. The unit of the blending ratio of each component is % by weight.

First, a matrix resin pulverized into an average particle diameter of 100 µm (50% particle diameter based on mass) with an atomizer pulverizer, a flame-retardant fiber, a metal hydroxide, and pulp were added to water as a solvent according to the formulation shown in Table 1 and stirred for 30 minutes with a disperser to obtain a mixture. Here, a total of 100 parts by weight of the constituent material composed of the matrix resin, the flame-retardant fiber, the metal hydroxide, and the pulp was added to 10,000 parts by weight of water.

Subsequently, a flocculating agent dissolved in water in advance was added in an amount of 0.2% by weight with respect to the total weight of the constituent materials described above, and the constituent materials were flocculated in the form of a floc.

Subsequently, the obtained flocculate was separated from water with a 30 mesh metal net. Thereafter, the flocculate was dehydrated and pressed, and further dried in a dryer at 50°C for 5 hours to thereby obtain a sheet-like flame-retardant sheet-forming body. The yield was 97%.

The sheet-like flame-retardant sheet-forming body obtained in the respective Examples exhibited easy workability and excellent design properties.

### (Production of flame-retardant sheet-formed product)

For the respective Examples and the respective Comparative Examples, a flame-retardant sheet-formed product was produced as follows.

First, the sheet-like flame-retardant sheet-forming body obtained above was cut into a size of 40 cm × 40 cm. Next, the cut flame-retardant sheet-forming body was heat-treated for 10 minutes at a pressure of 300 kg/cm² and a temperature of 180°C to obtain a flame-retardant sheet-formed product having a thickness of 40 cm × 40 cm × 1 mm.

Using the obtained flame-retardant sheet-formed product, each evaluation shown below and in the table was carried out. The results are shown in Tables 2 to 4. The sheet-like flame-retardant sheet-forming body obtained in Comparative Example 2 was judged that shaping was impossible due to occurrence of breaking and cracking in the sheet-forming body in the case of being heated and pressurized under the above-mentioned conditions. Therefore, the following evaluations were not carried out in Comparative Example 2.

### <Comparative Example 3>

Each of the evaluations shown below and in the table was carried out using a sheet-like polycarbonate copolymer "LEXAN FST9705" (having a thickness 1 mm, manufactured by SABIC Innovative Plastics Co., Ltd., hereinafter simply referred to as "sheet-like PC").

The results are shown in Tables 2 and 3.

The flame-retardant sheet-formed products of the respective Examples and Comparative Example 1 and the sheet-like PC of Comparative Example 3 were evaluated as follows.

### <Evaluation>

### • Section observation

The flame-retardant sheet-forming bodies of the respective Examples and Comparative Example 1 were cut in the thickness direction. The cross section of the flame-retardant sheet-forming body was observed under a microscope, thus confirming that flame-retardant fibers were arranged in the plane direction of each sheet-like flame-retardant sheet-forming body. In addition, since the sheet-like PC of Comparative Example 3 did not contain flame-retardant fibers, naturally, it was not confirmed that the fibers were oriented in the plane direction.

### •Smoke emission test

The flame-retardant sheet-formed products or sheet-like PCs (hereinafter, referred to as "flame-retardant sheet-formed product and the like") of the respective Examples and the respective Comparative Examples were subjected to a smoke emission test in accordance with the FAR 25.853 standard required for aircraft interior parts. The results are shown in Table 2.

### •Combustion toxicity test

The flame-retardant sheet-formed products and the like of the respective Examples and the respective Comparative Examples were subjected to a combustion toxicity (toxic gas generation) test in accordance with the ABD 0031 standard required for aircraft interior parts. The results are shown in Table 2.

### •Vertical burn test

The flame-retardant sheet-formed products and the like of the respective Examples and the respective Comparative Examples were subjected to a vertical burn test (60 seconds of flame exposure) in accordance with the FAR 25.853 standard required for aircraft interior parts. The results are shown in Table 2.

### •Tensile test

The flame-retardant sheet-formed products and the like of the respective Examples and the respective Comparative Examples were subjected to a tensile test measurement (n = 5) according to the following conditions, and the average value of the measurement values was calculated. The results are shown in Table 2.
Standard referred to: JIS K7113 Plastic tensile test method
Test piece: 1 (1/2) shape
Test speed: 1 mm/min
Distance between jaws: 58 mm

### •Heat release test

The flame-retardant sheet-formed products and the like of Examples 2 to 6 and Comparative Example 3 were subjected to a heat release test in accordance with the FAR 25.853 standard required for aircraft interior parts. The results are shown in Table 3.

### •UL-94V test

The flame-retardant sheet-formed products of Examples 3 and 4 were subjected to a UL-94V test (n = 5) in accordance with the UL94 standard which is a rubber flame retardancy test standard. The results are shown in Table 4.

### •Exothermicity test

The flame-retardant sheet-formed products of Examples 3 and 4 were subjected to an exothermicity test based on a cone calorimeter method in accordance with the ISO 5660 standard. The results are shown in Table 4.

**[Table 1]**

| | | Example 1 | Example 2 | Example 3 | Example 4 | Example 5 | Example 6 | Comparative Example 1 | Comparative Example 2 |
|---|---|---|---|---|---|---|---|---|---|
| Matrix resin | Phenol resin [wt%] | 64 | 61 | 58 | 44 | 57 | 51 | 65 | 39 |
| Pulp | Aramid pulp [wt%] | 5 | 5 | 5 | 5 | 5 | 5 | 5 | 5 |
| Flame-retardant fiber | Aramid fiber [wt%] | - | - | - | 21 | - | - | 30 | 16 |
| | Pitch-based carbon fiber [wt%] | - | - | - | 20 | - | - | - | 15 |
| | PBO fiber [wt%] | 30 | 29 | 27 | - | 26 | 24 | - | - |
| Metal hydroxide | Aluminum hydroxide [wt%] | 1 | 5 | 10 | 10 | 12 | 20 | - | 25 |
| Thickness [mm] | | 1 | 1 | 1 | 1 | 1 | 1 | 1 | 1 |

In Table 1, details of each component are as follows.
Phenol resin: PR-51723 manufactured by Sumitomo Bakelite Co., Ltd.
Aramid pulp: KEVLAR pulp 1F303 manufactured by Du Pont-Toray Co., Ltd.
Aramid fiber: TECHNORA T-32PNW (fiber length: 3 mm) manufactured by Teijin Limited
Pitch-based carbon fiber: DIALEAD K223HE manufactured by Mitsubishi Plastics, Inc.
PBO fiber: ZYLON AS (fiber length: 3 mm) manufactured by Toyobo Co., Ltd.
Aluminum hydroxide: HIGILITE H-32 manufactured by Showa Denko K.K.

**[Table 2]**

| | | Example 1 | Example 2 | Example 3 | Example 4 | Example 5 | Example 6 | Comparative Example 1 | Comparative Example 3 |
|---|---|---|---|---|---|---|---|---|---|
| Smoke emission test FAR 25.853 | 4 min maximum specific optical density [-] | 0.2 | 0.2 | 0.1 | 0 | 0.1 | 0.1 | 1 | 14 |
| Combustion toxicity test ABD 0031 | HCN (@4min) [ppm] | 1.5 | 1.5 | 1.5 | 1.5 | 2 | 2 | 2 | <1 |
| | CO (@4min) [ppm] | 10 | 30 | 35 | 30 | 30 | 35 | 75 | 180 |
| | NO+NO₂ (@4min) [ppm] | 0 | 0 | <1 | <1 | 0 | 0 | <1 | <1 |
| | SO₂ (@4min) [ppm] | - | - | <1 | <1 | - | - | <1 | <1 |
| | HF (@4min) [ppm] | - | - | <1 | <1 | - | - | <1 | 28 |
| | HCl (@4min) [ppm] | - | - | <1 | <1 | - | - | <1 | 10 |
| Vertical burn test (60 seconds of flame exposure) FAR 25.853 | Residual flame time [sec] | 0 | 0 | 1.1 | 0 | 0 | 0 | 13.5 | 0 |
| | Burning distance [inch] | 1.2 | 1.0 | 0.7 | 0.1 | 1.2 | 1.1 | 2.1 | 5.2 |
| | Burning time of melt [sec] | 0 | 0 | 0 | 0 | 0 | 0 | 0 | 0 |
| Tensile test (n=5) | Strength [MPa] | 233 | 224 | 231 | 175 | 206 | 159 | 262 | 74 |
| | Elastic modulus [GPa] | 10.9 | 9.5 | 9.3 | 10.4 | 9.2 | 11.4 | 8.1 | 2.5 |
| Specific gravity | [g/cm³] | 1.41 | 1.45 | 1.48 | 1.62 | 1.5 | 1.59 | 1.3 | 1.34 |

**[Table 3]**

| | | Example 2 | Example 3 | Example 4 | Example 5 | Example 6 | Comparative Example 3 |
|---|---|---|---|---|---|---|---|
| Heat release test FAR 25.853 | 2 min gross heating value [kWmin/m²] | 31 | 8 | 31 | 33 | 21 | 32 |
| | 5 min peak heat release rate [kW/m²] | 52 | 21 | 85 | 53 | 56 | 34 |

**[Table 4]**

| | | Example 3 | Example 4 |
|---|---|---|---|
| UL-94V test (n=5) | Thickness [mm] | 1 | 1 |
| | Judgment | V-0 | V-0 |
| | Residual flame time (maximum) [sec] | 4 | 0 |
| | Total residual flame time [sec] | 14 | 0 |
| | Second burning time (maximum) [sec] | 4 | 0 |
| Exothermicity test Cone calorimeter method | Maximum heat release rate [kW/m²] | 80 | 199 |
| | Gross heating value [kWmin/m²] | 104 | 191 |

As shown in Tables 2 to 4, the flame-retardant sheet-formed products of the respective Examples exhibited excellent flame retardancy and sufficient suppression of smoke emission and combustion toxicity. In addition, the flame-retardant sheet-formed products of the respective Examples exhibited excellent mechanical properties (tensile strength and elastic modulus). On the other hand, the flame retardancy of the flame-retardant sheet-formed products (or sheet-like PCs) of Comparative Examples 1 and 3 was inferior to that of the respective Examples.

### Industrial Applicability

In the flame-retardant sheet-forming body of the present invention, the flame-retardant fibers moderately form random entanglements among the flame-retardant fibers while maintaining the shape of the flame-retardant fiber, in the plane direction of the flame-retardant sheet-forming body. In addition, in the thickness direction of the flame-retardant sheet-forming body, flame-retardant fibers overlap in layers. Further, the flame-retardant sheet-forming body further contains a predetermined amount (1 to 20%) of metal hydroxide. The flame-retardant sheet-forming body of the present invention is constituted of a predetermined composition containing a matrix resin, a flame-retardant fiber and a metal hydroxide, and the structure thereof has the above-mentioned special structure, thereby making it possible to reduce smoke emission and combustion toxicity while having high flame retardancy which has not been achieved in a conventional art. Therefore, the present invention has industrial applicability.

## Claims

1. A flame-retardant sheet-forming body, comprising:
a matrix resin;
a flame-retardant fiber; and
a metal hydroxide,
wherein the content of the metal hydroxide is 1 to 20% by weight with respect to a total weight of the flame-retardant sheet-forming body.

2. The flame-retardant sheet-forming body according to claim 1, wherein the flame-retardant fiber is at least one of an aramid fiber, a pitch-based carbon fiber, and a PBO fiber.

3. The flame-retardant sheet-forming body according to claim 1 or 2, wherein the matrix resin is a phenol resin.

4. The flame-retardant sheet-forming body according to any one of claims 1 to 3, wherein the content of the matrix resin is 5 to 90% by weight and the content of the flame-retardant fiber is 5 to 60% by weight with respect to a total weight of the flame-retardant sheet-forming body.

5. The flame-retardant sheet-forming body according to any one of claims 1 to 4, wherein the flame-retardant sheet-forming body further comprises a pulp.

6. The flame-retardant sheet-forming body according to any one of claims 1 to 5, wherein the flame-retardant sheet-forming body is formed into a sheet-like shape.

7. The flame-retardant sheet-forming body according to any one of claims 1 to 5, wherein the flame-retardant sheet-forming body is formed into a predetermined three-dimensional shape.

8. A method for producing a flame-retardant sheet-formed product, comprising:
a step of heating and pressurizing the flame-retardant sheet-forming body according to claim 6 or 7.

9. A method for producing a flame-retardant sheet-forming body, comprising:
a step of mixing a matrix resin, a flame-retardant fiber and a metal hydroxide in a solvent to obtain a mixture, and then subjecting the mixture to sheet-forming to obtain a flame-retardant sheet-forming body,
wherein the content of the metal hydroxide is 1 to 20% by weight with respect to a total weight of the flame-retardant sheet-forming body.
